# EUROPÄISCHE PATENTSCHRIFT

(11) **EP 1 117 889 B1**
(45) Veröffentlichungstag und Bekanntmachung des Hinweises auf die Patenterteilung: **02.01.2003**
(21) Anmeldenummer: 99950668.6
(22) Anmeldetag: 07.10.1999
(51) Int. Cl.: E05F 11/42, B60J 1/17

(54) **VORRICHTUNG ZUM FÜHREN UND DICHTEN EINER VERFAHRBAREN SCHEIBE**
DEVICE FOR GUIDING AND SEALING A MOVEABLE WINDOW
DISPOSITIF POUR GUIDER ET RENDRE ETANCHE UNE VITRE MOBILE

(30) Priorität: 09.10.1998 DE 19846658
(43) Veröffentlichungstag der Anmeldung: 25.07.2001
(73) Patentinhaber: Metzeler Automotive Profile Systems GmbH, D-88131 Lindau/Bodensee (DE)
(72) Erfinder: KORTE, Hans-Bernd, D-30419 Hannover (DE)
(74) Vertreter: Preissner, Nicolaus, Dipl.-Ing.
(86) Internationale Anmeldenummer: EP9907536
(87) Internationale Veröffentlichungsnummer: WO00022269

(56) Entgegenhaltungen:
- DE-A- 4 008 061
- DE-A- 4 435 088
- FR-A- 2 550 267
- GB-A- 983 966
- US-A- 4 170 847

## Beschreibung

Die vorliegende Erfindung betrifft eine Vorrichtung zum Führen und Dichten einer verfahrbaren Scheibe, insbesondere einer Seitenscheibe eines Kraftfahrzeugs, mit mindestens einer Führungsschiene, die einen Innenraum zum Führen von Seitenkanten der Scheibe und Dichtelemente zur Abdichtung der Scheibe aufweist

Eine derartige Vorrichtung ist aus der DE 44 35 088 A1 bekannt, die auf dieselbe Anmelderin zurückgeht. Die Führungsschiene der bekannten Vorrichtung weist einen Innenraum auf, der zum Führen von Seitenkanten der verfahrbaren Scheibe dient. Die Führungsschiene ist weiter mit Dichtelementen zur Abdichtung der Scheibe versehen. Zum Anheben und Absenken der verfahrbaren Scheibe dient eine zusätzliche Hubvorrichtung.

Nachteilig bei der bekannten Vorrichtung ist, daß ein Anheben oder Absenken der Scheibe nur durch die zusätzliche Hubvorrichtung erreicht werden kann. Diese Hubvorrichtung wird separat hergestellt und montiert. Hierdurch werden sowohl der Herstellungsaufwand als auch der Montageaufwand wesentlich erhöht. Darüber hinaus erhöht die Zahl der verwendeten Bauteile das Gesamtgewicht. Der erforderliche Bauraum ist relativ groß, so daß nur wenig Platz für weitere Einbauten zur Verfügung steht.

Weiterhin ist aus der GB-A-983 966 eine bewegliche Fensterscheibe bekannt, die ein sich mit der Fensterscheibe bewegendes Gehäuse aufweist. Das Gehäuse ist an zwei gegenüberliegenden Seiten mit Zahnstangen versehen, in die jeweils ein Zahnrad eingreift, um die Scheibe zu bewegen. Die Fensterscheibe ist zusammen mit dem Gehäuse und den Zahnstangen in stationären Führungsschienen angeordnet. Die GB-A-983 966 offenbart kein Antriebsmittel, das unmittelbar mit den Führungsschienen zusammenwirkt.

Aufgabe der vorliegenden Erfindung ist es daher, eine Vorrichtung zum Führen und Dichten einer verfahrbaren Scheibe bereitzustellen, die bei einfacher Konstruktion, geringem Gewicht und geringem Platzbedarf ein Verfahren der Scheibe ermöglicht.

Erfindungsgemäß wird diese Aufgabe bei einer Vorrichtung der eingangs genannten Art dadurch gelöst, daß die Vorrichtung mindestens ein Antriebsmittel zum Verfahren der Scheibe umfaßt, das mit der Führungsschiene formschlüssig oder reibschlüssig zusammenwirkt.

Die Führungsschiene dient somit nicht nur zum Führen und Dichten der verfahrbaren Scheibe, sondern auch zum Verfahren. Eine zusätzliche Hubvorrichtung zum Anheben und Absenken der Scheibe, die separat hergestellt und montiert werden muß, ist nicht mehr erforderlich. Die Zahl der Bauteile wird daher wesentlich reduziert. Weiter wird bei geringerem Platzbedarf und geringerem Gewicht eine einfache Konstruktion ermöglicht.

Das Antriebsmittel und die Führungsschiene können durch Formschluß oder Reibschluß zusammenwirken. Der Formschluß kann durch ein angetriebenes Zahnrad des Antriebsmittels bewirkt werden, das in zugeordnete Vorsprünge oder Ausnehmungen der Führungsschiene eingreift. Derartige Zahnräder sind in unterschiedlichsten Ausführungsformen bereits erhältlich, so daß bei geringem Aufwand eine optimale Anpassung an unterschiedliche Randbedingungen, insbesondere die Größe und das Gewicht der zu bewegenden Scheibe oder die geforderte Schließgeschwindigkeit, erfolgen kann. Bei einem reibschlüssigen Zusammenwirken wird ein angetriebenes Reibrad gegen eine zugeordnete Fläche der Führungsschiene gedrückt. Alternativ kann das Antriebsmittel einen Linearmotor aufweisen.

Vorteilhafte Ausgestaltungen und Weiterbildungen der Erfindung gehen aus den abhängigen Ansprüchen hervor.

Vorteilhaft weist jedes Antriebsmittel einen Elektromotor auf, der mindestens ein Antriebselement antreibt, das mit der Führungsschiene zusammenwirkt. Der Elektromotor stellt bei kleiner Größe und kleinem Gewicht ein ausreichendes Drehmoment zum Antrieb des Antriebselements bereit.

In vorteilhafter Ausführung weist die Führungsschiene einen in dem Innenraum angeordneten Stützbereich auf, der mit dem Antriebselement zusammenwirkt. Die Außenseiten der Führungsschiene bleiben unverändert glatt, so daß ein ansprechendes Äußeres erreicht wird. Gleichzeitig wird eine kompakte Bauart ermöglicht. Der Stützbereich wird ausreichend steif ausgebildet, während die weiteren Bereiche der Führungsschiene mit geringerer Steifigkeit und leichtgewichtig ausgebildet werden können.

Gemäß einer vorteilhaften Weiterbildung ist der Stützbereich in Form von Ausnehmungen in einem Träger der Führungsschiene ausgebildet, in die das mindestens eine Antriebselement eingreift. Das Antriebselement ist vorteilhaft als Zahnrad ausgebildet. Der Träger stellt eine ausreichende Steifigkeit für die Führungsschiene bereit und dient gleichzeitig als Stützbereich zum Verfahren der Scheibe. Die Ausnehmungen können rasch ausgestanzt werden. Alternativ kann der Träger mit Vorsprüngen in Form von Ausprägungen versehen werden. Ein separates Bauteil, das getrennt hergestellt und anschließend mit der Führungsschiene verbunden wird, ist nicht erforderlich.

Vorteilhaft ist der Träger aus Metall, insbesondere aus Aluminium, oder aus Kunststoff hergestellt. Hierdurch ergibt sich eine hohe Festigkeit bei geringem Gesamtgewicht.

Gemäß einer vorteilhaften Ausbildung weist der Träger einen im wesentlichen U-förmigen Querschnitt auf und begrenzt den Innenraum der Führungsschiene. Dieser Querschnitt des Trägers ist einfach herzustellen, stabil und von geringem Gesamtgewicht.

In vorteilhafter Weiterbildung sind die Dichtelemente an den Träger anextrudiert. Der Träger kann somit unabhängig von den Dichtelementen in Abhängigkeit von den jeweiligen Randbedingungen hergestellt werden.

Vorteilhaft ist das mindestens eine Antriebselement an der Scheibe befestigt. Der Stützbereich als relativ großes Bauteil ist feststehend ausgebildet, während der kleine und vergleichsweise leichtgewichtige Elektromotor und das Antriebselement zusammen mit der Scheibe verfahren werden. Hierdurch wird die Masse der bewegten Bauteile insgesamt verringert.

Nach einer vorteilhaften Weiterbildung ist der Innenraum der Führungsschiene geeignet, das Antriebselement aufzunehmen. Das Antriebselement verläuft somit vor Verschmutzung geschützt direkt in dem Innenraum. Weiter wird eine kompakte Bauform ermöglicht.

In anderer vorteilhafter Weiterbildung ist der Innenraum der Führungsschiene geeignet, das Antriebselement und den Elektromotor aufzunehmen. Sämtliche für das Verfahren der Scheibe erforderlichen Bauteile können dann vor Verschmutzungen geschützt in dem Innenraum angeordnet werden.

Gemäß einer ersten vorteilhaften Ausgestaltung ist jeder geführten Seitenkante der verfahrbaren Scheibe je mindestens ein Antriebselement zugeordnet. Die Scheibe wird somit beidseitig im Bereich der geführten Seitenkanten angetrieben, so daß ein Verkippen oder Verkanten der Scheibe ausgeschlossen.

In vorteilhafter Weiterbildung ist jeder geführten Seitenkante ein Elektromotor zugeordnet. Die Seitenkanten werden durch die miteinander synchronisierten Elektromotoren gleichzeitig bewegt, so daß ein Verkanten der Scheibe ausgeschlossen wird.

Nach einer weiteren vorteilhaften Weiterbildung ist ein Elektromotor vorgesehen, der auf die Antriebselemente an den geführten Seitenkanten wirkt. Eine Synchronisation mehrerer Elektromotoren ist nicht erforderlich. Weiter verringern sich die Zahl der erforderliche Bauteile und das Gesamtgewicht.

Gemäß einer zweiten vorteilhaften Ausgestaltung ist einer geführten Seitenkante mindestens ein von einem Elektromotor angetriebenes Antriebselement und der anderen geführten Seitenkante ein Stützlager zum Abstützen zugeordnet. In Abhängigkeit von den Randbedingungen wird die Scheibe zum Verfahren nur an einer Seitenkante angetrieben, während die andere Seitenkante über ein geeignetes Stützlager abgestützt ist. Diese Konstruktion erlaubt den Verzicht auf einen der Elektromotoren. ohne daß eine Verbindung zwischen den geführten Seitenkanten der Scheibe bestehen muß.

Vorteilhaft ist das Stützlager in dem Innenraum der Führungsschiene aufgenommen. Neben einer kompakten Bauweise wird gleichzeitig ein Schutz des Stützelements vor Verschmutzung erreicht.

In vorteilhafter Weiterbildung sind die Antriebselemente an den geführten Seitenkanten der Scheibe paarweise beabstandet und parallel zueinander angeordnet, wobei die Scheibe mittig zu den Antriebselementen angeordnet ist. Die beidseitig der Scheibe vorgesehenen Antriebselemente sichern die Scheibe gegen seitliches Verkippen und ermöglichen ein zuverlässiges Anheben und Absenken.

Gemäß einer vorteilhaften Ausgestaltung wirkt jeder Elektromotor über ein selbsthemmendes Getriebe, insbesondere ein Schneckengetriebe, auf das oder die zugeordneten Antriebselemente. Eine Bewegung der Scheibe ist somit nur durch in Gang setzen des Motors möglich. Die Scheibe wird hierdurch zuverlässig gegen ein unbeabsichtigtes Verschieben durch von außen wirkende Kräfte gesichert. Zusätzliche Bauteile, insbesondere eine separate Bremse, sind nicht erforderlich, können aber alternativ oder zusätzlich bereitgestellt werden.

Nachfolgend wird die Erfindung an Hand von Ausführungsbeispielen näher beschrieben, die schematisch in der Zeichnung dargestellt sind. Dabei zeigt:
- Figur 1: eine schematische Darstellung der erfindungsgemäßen Vorrichtung in einer ersten Ausführungsform;
- Figur 2: eine Vergrößerung der Einzelheit "X" aus Figur 1 in erster Ausführungsform;
- Figur 3: einen Schnitt längs der Linie III-III in Figur 2;
- Figur 4: eine Ansicht in Pfeilrichtung IV in Figur 2;
- Figur 5: eine Draufsicht auf Figur 2;
- Figur 6: eine schematische Darstellung eines Trägers 38 mit Ausnehmungen;
- Figur 7: eine Ansicht ähnlich Figur 6 mit einer weiteren Ausführungsform der Ausnehmungen;
- Figur 8: eine Ansicht ähnlich Figur 1 in zweiter Ausführungsform;
- Figur 9: eine Ansicht ähnlich Figur 1 in dritter Ausführungsform;
- Figur 10: die vergrößerte Einzelheit "X" aus Figur 1 in vierter Ausführungsform; und
- Figur 11: eine Draufsicht auf Figur 10.

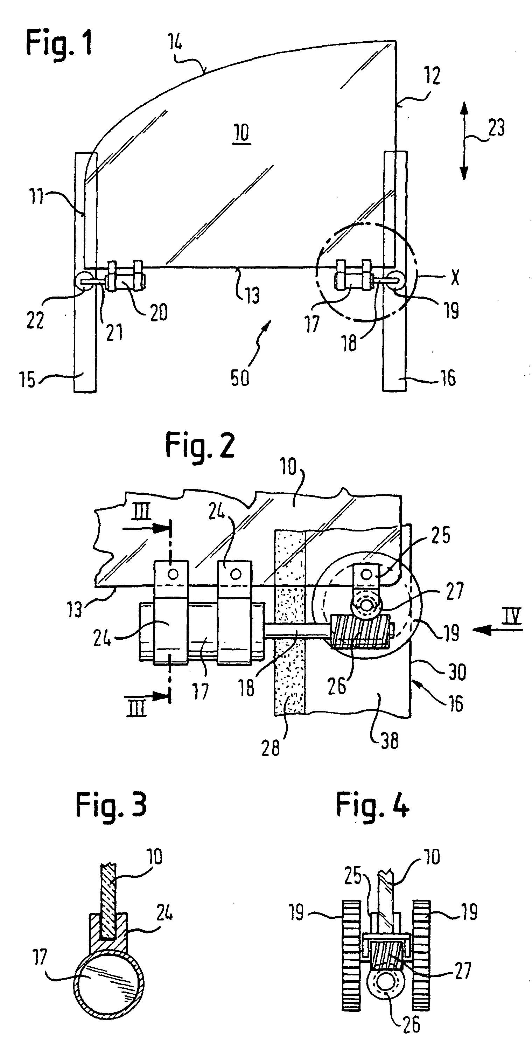

Figur 1 zeigt eine schematische Darstellung einer ersten Ausführungsform der erfindungsgemäßen Vorrichtung 50. Eine Scheibe 10 mit Seitenkanten 11, 12 einer Unterkante 13 und einer Oberkante 14 ist entlang der Seitenkanten 11, 12 in Führungsschienen 15, 16 geführt. Die Scheibe 10 ist in Pfeilrichtung 23 verfahrbar. Nahe der rechten Seitenkante 12 ist an der Unterkante 13 der Scheibe 10 ein Elektromotor 17 befestigt, der über eine Welle 18 auf ein Antriebselement 19 wirkt, das drehbar an der Scheibe 10 befestigt ist. Auch an der gegenüberliegenden Seitenkante 11 sind ein Elektromotor 20, eine Welle 21 und ein Antriebselement 22 vorgesehen. Die Elektromotoren 17, 20, die Wellen 18, 21 und die Antriebselemente 19, 22 bilden jeweils Antriebsmittel. Die Führungsschienen 15, 16 und die Antriebsmittel 17, 18, 19 und 20, 21, 22 sind Teil der Vorrichtung 50 zum Führen, Dichten und Verfahren der Scheibe 10.

Figur 2 zeigt die Einzelheit "X" aus Figur 1 in vergrößerter Darstellung. Der Elektromotor 17 und das Antriebselement 19 sind mittels Halterungen 24, 25 an der Unterkante 13 der Scheibe 10 befestigt. Die Welle 18 ist in ihrem von dem Elektromotor 17 abgewandten Bereich mit einer Schneckenwelle 26 versehen. Diese Schneckenwelle 26 kämmt mit einem Schneckenrad 27, das drehfest mit dem Antriebselement 19 verbunden ist. Das Antriebselement 19 ist vollständig in der Führungsschiene 16 aufgenommen. Es ist schematisch dargestellt, daß das Antriebselement 19 als Zahnrad ausgebildet ist und mit einem Stützbereich 30 der Führungsschiene 16 kämmt. Sobald der Motor 17 in Gang gesetzt wird, wird über die Welle 18, die Schneckenwelle 26 und das Schneckenrad 27 eine Drehung des Antriebselements 19 erzeugt. Das Antriebselement 19 wirkt mit dem in die Führungsschiene 16 integrierten Stützbereich 30 zusammen. Die Scheibe 10 wird hierdurch in Pfeilrichtung 23 verfahren.

Die Schneckenwelle 26 und das Schneckenrad 27 sind als selbsthemmendes Getriebe ausgebildet. Eine Verschiebung der Scheibe 10 bei abgeschaltetem Elektromotor 17 ist wegen der starken Untersetzung zwischen der Schneckenwelle 26 und dem Schneckenrad 27 nicht möglich. Die Scheibe 10 wird daher beim Abschalten des Elektromotors 17 in der jeweiligen Höhe zuverlässig ohne weitere Hilfsmittel arretiert.

Die Figuren 3 und 4 zeigen Einzelheiten der Befestigung des Elektromotors 17 und des Antriebselements 19 an der Scheibe 10. Die Scheibe 10 ist beidseitig von den Halterungen 24, 25 umgriffen und etwa mittig angeordnet. Es ist ebenfalls erkennbar, daß zwei Antriebselemente 19 vorgesehen sind, die paarweise beabstandet und parallel zueinander angeordnet sind. Die Scheibe 10 ist im wesentlichen mittig zu den Antriebselementen 19 angeordnet. Diese mittige Anordnung wirkt einem seitlichen Verkippen der Scheibe 10 entgegen. Gleichzeitig wird die erforderliche Bauhöhe verringert, da die Antriebselemente 19 die Scheibe 10 stellenweise übergreifen können. Dies ist schematisch in den Figuren 2 und 4 dargestellt.

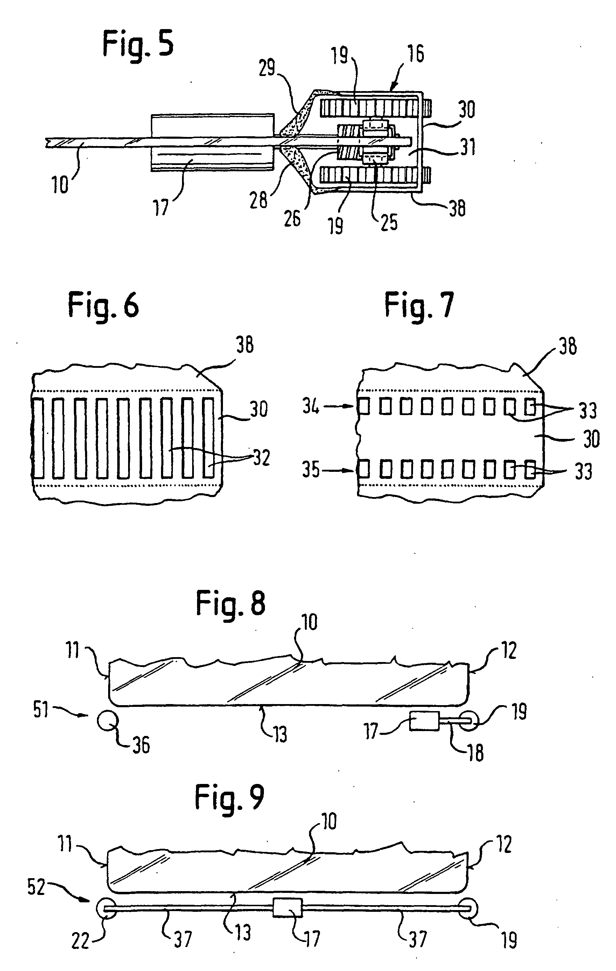

Figur 5 zeigt eine Draufsicht auf Figur 2. Die Führungsschiene 16 weist einen Träger 38 auf, der im Querschnitt im wesentlichen U-förmig ausgebildet ist. Der Träger 38 kann aus Metall, insbesondere aus Aluminium, oder aus Kunststoff hergestellt sein. Er begrenzt einen Innenraum 31 der Führungsschiene 16. In dem Innenraum 31 sind die Antriebselemente 19, die Schneckenwelle 26 und das Schneckenrad 27 sowie die Halterung 25 zur Befestigung an der Scheibe 10 aufgenommen. Aus Gründen der zeichnerischen Vereinfachung ist die Halterung 24 zur Befestigung des Motors 17 in Figur 5 nicht dargestellt. Der Stützbereich 30 ist an der den Antriebselementen 19 zugeordneten Innenseite des Trägers 38 in dem Innenraum 31 angeordnet.

Zur Abdichtung dienen Dichtelemente 28, 29, die an den Träger 38 anextrudiert sind. Die Dichtelemente 28, 29 legen sich dichtend an der Scheibe 10 an. Der Zwischenraum zwischen den Dichtelementen 28, 29 wird nicht nur von der Scheibe 10, sondern auch von der Welle 18 durchgriffen. Die Dicke der Welle 18 entspricht daher im wesentlichen der Dicke der Scheibe 10 oder liegt nur geringfügig darüber. Hierdurch wird eine zuverlässige, dichtende Anlage der Dichtelemente 28, 29 und der Scheibe 10 erreicht.

Figur 6 zeigt eine schematische Darstellung des Trägers 38 mit dem Stützbereich 30. Im Stützbereich 30 sind mehrere parallel zueinander angeordnete Ausnehmungen 32 vorgesehen. Die Ausnehmungen 32 erstrecken sich im wesentlichen über die gesamte Breite des Stützbereichs 30, der mit punktierten Linien abgegrenzt ist.

Figur 7 zeigt eine andere Ausgestaltung von Ausnehmungen 33. Diese Ausnehmungen 33 sind in zwei parallel verlaufenden Reihen 34, 35 angeordnet. In der Mitte ist der Stützbereich 30 frei von Ausnehmungen. so daß eine höhere Stabilität erreicht wird.

Wie in den Figuren 2 und 5 schematisch angedeutet, greifen die Antriebselemente 19 mit nicht näher dargestellten Zähnen in die Ausnehmungen 32 oder 33 ein. Der in den Figuren 2 und 5 überstehende Bereich der Antriebselemente 19 stellt dieses Eingreifen schematisiert dar. Selbstverständlich sind die Zähne der Antriebselemente 19 und die Ausnehmungen 32, 33 von der Lage und Größe aufeinander abgestimmt.

Zum Bewegen der Scheibe 10 in Pfeilrichtung 23 werden die Elektromotoren 17, 20 gleichzeitig in Gang gesetzt. Sie sind hierbei derart synchronisiert, daß eine Bewegung der Scheibe 10 ohne Verkanten ermöglicht wird. Die Drehung der Elektromotoren 17, 20 wird über die Wellen 18, 21 und die Schneckengetriebe 26, 27 auf die Antriebselemente 19, 22 übertragen. Diese Antriebselemente 19, 22 wirken mit dem Stützbereich 30 in den Führungsschienen 15, 16 zusammen. Die Drehung der Antriebselemente 19, 22 führt zu einer Verschiebung der Scheibe 10 und der Elektromotoren 17, 20, der Wellen 18, 21, der Antriebselemente 19, 22 und der Schneckengetriebe 26, 27 in Pfeilrichtung 23. Je nach der Drehrichtung der Elektromotoren 17, 20 wird die Scheibe 10 angehoben oder abgesenkt. Beim Abschalten der Elektromotoren 17, 20 verhindert das selbsthemmende Schneckengetriebe 26, 27 eine unerwünschte Bewegung der Scheibe 10. Während der Bewegung und auch im Stillstand wird die Scheibe 10 entlang der Führungsschienen 15, 16 von den Dichtelementen 28, 29 zuverlässig geführt. Gleichzeitig wird durch das Abdichten der Dichtelemente 28, 29 die gewünschte Dichtwirkung erzielt.

Die Länge der Führungsschienen 15, 16 wird hierbei etwas größer gewählt als die Gesamthöhe der Scheibe 10 zusammen mit den daran befestigten Elektromotoren 17, 20 und den Antriebselementen 19, 22. Dies ist beispielsweise in Figur 1 dargestellt. Falls die Scheibe 10 nicht vollständig abgesenkt werden soll, kann die Länge der Führungsschienen 15, 16 auch verkürzt werden. Die Vorrichtung 50 wird bevorzugt in den Fensterschacht einer Kraftfahrzeugtür eingesetzt. Sie ist dann von außen her nicht sichtbar. Zur weiteren Führung und Abdichtung der Fensterscheibe 10 im Bereich der Fensteröffnung der Fahrzeugtür können nicht näher nicht dargestellte, weitere Führungsschienen dienen.

Figur 8 zeigt eine weitere Ausführungsform einer erfindungsgemäßen Vorrichtung 51 zum Führen, Dichten und Verfahren einer Scheibe 10. Bei dieser Vorrichtung 51 sind nur an der rechten Seitenkante 12 der Scheibe 10 ein Motor 17, eine Welle 18 und ein Antriebselement 19 vorgesehen. An der gegenüberliegenden geführten Seitenkante 11 ist ein Stützlager 36 zum Abstützen vorgesehen. Vorteilhaft ist das Stützlager 36 ebenfalls in dem Innenraum 31 der Führungsschiene 15 aufgenommen, wie schematisch an Hand des Antriebselements 22 in Figur 1 gezeigt. Das Stützelement 36 kann hierbei wie die Antriebselemente 19, 22 ausgebildet und an der Scheibe 10 befestigt sein.

Figur 9 zeigt eine weitere Ausführungsform einer erfindungsgemäßen Vorrichtung 52. Bei dieser Vorrichtung 52 ist ein Elektromotor 17 vorgesehen, der etwa in der Mitte der Unterkante 13 der Scheibe 10 angebracht ist. Beiden Seitenkanten 11, 12 der Scheibe 10 sind Antriebselemente 19, 22 zugeordnet, die über Wellen 37 von dem Elektromotor 17 angetrieben werden. Die Antriebselemente 19, 22 sind hierbei, wie in den Figuren 1 und 5 dargestellt, in Innenräumen 31 der Führungsschienen 15, 16 aufgenommen und wirken mit Stützbereichen 30 zum Bewegen der Scheibe 10 zusammen.

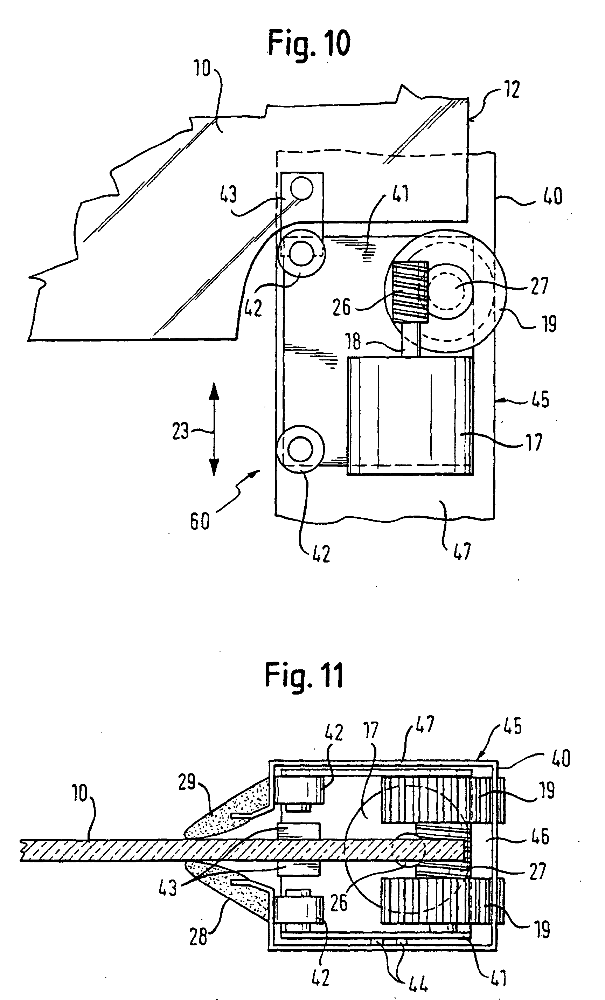

In den Figuren 10 und 11 ist eine weitere Ausführungsform einer erfindungsgemäßen Vorrichtung 60 dargestellt. Der Elektromotor 17 ist zusammen mit der Welle 18 und der Schneckenwelle 26 sowie den Antriebselementen 19 in einem Wagen 41 aufgenommen. Die Antriebselemente 19 sind an dem Wagen 41 drehbar gelagert. Der Wagen 41 weist Stützrollen 42 auf, ist in einem Innenraum 46 einer Führungsschiene 45 aufgenommen und mit einer Halterung 43 an der Scheibe 10 befestigt. An der der Mitte der Scheibe 10 zugewandten Seite stützt sich der Wagen 41 mit seinen Stützrollen 42 an einem Träger 47 der Führungsschiene 45 ab. An der gegenüberliegenden Seite erfolgt eine Abstützung durch die Antriebselemente 19, die wiederum als Zahnräder ausgebildet sind. Ein Stützbereich 40 des Trägers 47 weist hierbei Ausnehmungen auf, die den in Figur 6 oder Figur 7 dargestellten Ausnehmungen 32, 33 entsprechen. Der Träger 47 weist weiter anextrudierte Dichtelemente 28, 29 auf, die sich dichtend an der Scheibe 10 anlegen.

An der gegenüberliegenden Seitenkante 11 der Scheibe 10 kann ein spiegelbildlich ausgebildeter Wagen 41 mit einem weiteren Elektromotor und weiteren Antriebselementen 19 vorgesehen sein. Alternativ ist auch hier die Verwendung eines Stützlagers 36 möglich.

Zum Bewegen der Scheibe 10 in Pfeilrichtung 23 wird der Elektromotor 17 in Gang gesetzt. Er wirkt über die Welle 18 und die Schnekkenwelle 26 über das schematisch dargestellte Schneckenrad 27 auf die Antriebselemente 19. Die Antriebselemente 19 greifen in die Ausnehmungen 32 oder 33 des Stützbereichs 40 an dem Träger 47 und bewegen die Scheibe 10. Beim Abschalten des Elektromotors 17 bewirkt das Schneckengetriebe 26, 27 wiederum eine zuverlässige Arretierung des Scheibe 10.

Die in den Figuren 10 und 11 dargestellte Ausführungsform ermöglicht die vollständige Aufnahme des Elektromotors 17 und der Antriebselemente 19 in dem Innenraum 46 der Führungsschiene 45. Die Energiezufuhr zu dem Elektromotor 17 erfolgt mittels Leiterbahnen 44, die ebenfalls in dem Innenraum 46 aufgenommen sind. Der Elektromotor 17, die Antriebselemente 19 und die Leiterbahnen 44 sind in dem Innenraum 46 vor Verschmutzung und Beschädigung geschützt. Der von der Scheibe 10 überstrichene Bereich ist frei von Kabeln für die Energiezufuhr des Motors 17. Die gesamte Vorrichtung 60 ist in die Führungsschiene 45 und eine gegenüberliegende, spiegelbildlich ausgebildete weitere Führungsschiene integriert.

Sämtliche Ausführungsformen der Erfindung ermöglichen den Verzicht auf eine zusätzliche Hubvorrichtung für die Scheibe 10. Die erforderliche Verfahrbarkeit der Scheibe 10 wird vielmehr durch die Antriebselemente 19, 22 und die Stützbereiche 30, 40 erreicht, die in die Führungsschienen 15, 16, 45 integriert sind und in deren jeweiligen Innenräumen 31, 46 angeordnet sind. Diese Innenräume 31, 46 werden von den Trägern 38, 47 der Führungsschienen 15, 16, 45 begrenzt, die gleichzeitig die erforderliche Steifigkeit für die Führungsschienen 15, 16, 45 bereitstellen. Die Zahl der erforderlichen Bauteile wird wesentlich reduziert. Dies führt zu einer einfacheren Herstellung und Montage. Auch das Gewicht und die Baugröße werden stark verringert.

## Patentansprüche

1. Vorrichtung zum Führen und Dichten einer verfahrbaren Scheibe (10), insbesondere einer Seitenscheibe eines Kraftfahrzeugs, mit mindestens einer Führungsschiene (15, 16; 45), die einen Innenraum (31; 46) zum Führen von Seitenkanten (11; 12) der Scheibe (10) und Dichtelemente (28, 29) zur Abdichtung der Scheibe (10) aufweist, **dadurch gekennzeichnet, daß** die Vorrichtung (50; 51; 52, 60) mindestens ein Antriebsmittel (17, 18, 19; 20, 21, 22) zum Verfahren der Scheibe (10) umfaßt, das mit der Führungsschiene (15, 16) formschlüssig oder reibschlüssig zusammenwirkt.

2. Vorrichtung nach Anspruch 1, **dadurch gekennzeichnet, daß** jedes Antriebsmittel einen Elektromotor (17; 20) aufweist, der mindestens ein Antriebselement (19; 22) antreibt, das mit der Führungsschiene (15, 16; 45) zusammenwirkt.

3. Vorrichtung nach Anspruch 2, **dadurch gekennzeichnet, daß** die Führungsschiene (15, 16; 45) einen in dem Innenraum (31; 46) angeordneten Stützbereich (30; 40) aufweist, der mit dem Antriebselement (19; 22) zusammenwirkt.

4. Vorrichtung nach Anspruch 3, **dadurch gekennzeichnet, daß** der Stützbereich (30; 40) in Form von Ausnehmungen (32; 33) in einem Träger (38; 47) der Führungsschiene (15, 16; 45) ausgebildet ist, in die das mindestens eine Antriebselement (19; 22) eingreift.

5. Vorrichtung nach Anspruch 4, **dadurch gekennzeichnet, daß** der Träger (38; 47) aus Metall, insbesondere aus Aluminium, oder aus Kunststoff hergestellt ist.

6. Vorrichtung nach Anspruch 4 oder 5, **dadurch gekennzeichnet, daß** der Träger (38; 47) einen im wesentlichen U-förmigen Querschnitt aufweist und den Innenraum (31; 46) der Führungsschiene (15, 16; 45) begrenzt.

7. Vorrichtung nach einem der Ansprüche 4 bis 6, **dadurch gekennzeichnet, daß** die Dichtelemente (28, 29) an den Träger (38; 47) anextrudiert sind.

8. Vorrichtung nach einem der Ansprüche 1 bis 7, **dadurch gekennzeichnet, daß** das mindestens eine Antriebselement (17, 18, 19; 20, 21, 22) an der Scheibe (10) befestigt ist.

9. Vorrichtung nach einem der Ansprüche 2 bis 8, **dadurch gekennzeichnet, daß** der Innenraum (31; 46) der Führungsschiene (15, 16; 45) geeignet ist, das Antriebselement (19; 22) aufzunehmen.

10. Vorrichtung nach einem der Ansprüche 2 bis 8, **dadurch gekennzeichnet, daß** der Innenraum (46) der Führungsschiene (45) geeignet ist, das Antriebselement (19) und den Elektromotor (17) aufzunehmen.

11. Vorrichtung nach einem der Ansprüche 2 bis 10, **dadurch gekennzeichnet, daß** jeder geführten Seitenkante (11, 12) der beweglichen Scheibe (10) je mindestens ein Antriebselement (19; 22) zugeordnet ist.

12. Vorrichtung nach Anspruch 11, **dadurch gekennzeichnet, daß** jeder geführten Seitenkante (11; 12) ein Elektromotor (17; 20) zugeordnet ist.

13. Vorrichtung nach Anspruch 11, **dadurch gekennzeichnet, daß** ein Elektromotor (17) vorgesehen ist, der auf die Antriebselemente (19; 22) an den geführten Seitenkanten (11, 12) wirkt.

14. Vorrichtung nach einem der Ansprüche 2 bis 10, **dadurch gekennzeichnet, daß** einer geführten Seitenkante (12) mindestens ein von dem Elektromotor (17) angetriebenes Antriebselement (19) und der anderen geführten Seitenkante (11) ein Stützlager (36) zum Abstützen zugeordnet ist.

15. Vorrichtung nach Anspruch 14, **dadurch gekennzeichnet, daß** das Stützelement (36) in dem Innenraum (31; 46) der Führungsschiene (15, 16; 45) aufgenommen ist.

16. Vorrichtung nach einem der Ansprüche 2 bis 15, **dadurch gekennzeichnet, daß** die Antriebselemente (19; 22) an den geführten Seitenkanten (11; 12) der Schreibe (10) paarweise beabstandet und parallel zueinander angeordnet sind, wobei die Scheibe (10) mittig zu den Antriebselementen (19; 22) angeordnet ist.

17. Vorrichtung nach einem der Ansprüche 8 bis 16, **dadurch gekennzeichnet, daß** jeder Elektromotor (17; 20) über ein selbsthemmendes Getriebe (26, 27), insbesondere ein Schnekkengetriebe, auf das oder die zugeordneten Antriebselemente (19; 22) wirkt.

## Claims

1. A device for guiding and sealing a moveable window pane (10), more particularly a powered vehicle side window pane, including at least one guide rail (15, 16; 45) comprising a cavity (31; 46) for guiding side edges (11; 12) of said window pane (10) and sealing elements (28, 29) for sealing said window pane (10), **characterized in that** said device (50; 51; 52, 60) comprises at least one drive means (17, 18, 19; 20, 21, 22) for powering said window pane (10) in cooperation with said guide rail (15, 16; 45) positively or by friction contact.

2. The device as set forth in claim 1, **characterized in that** each drive means comprises an electric motor (17; 20) powering at least one drive element (19; 22) cooperating with said guide rail (15, 16; 45).

3. The device as set forth in claim 2, **characterized in that** said guide rail (15, 16; 45) comprises a supporting portion (30; 40) arranged in said cavity (31; 46) and cooperating with said drive element (19; 22).

4. The device as set forth in claim 3, **characterized in that** said supporting portion (30; 40) is configured in the form of recesses (32; 33) in a holder (38; 47) of said guide rail (15, 16; 45) with which at least one drive element (19; 22) engages.

5. The device as set forth in claim 4, **characterized in that** said holder (38; 47) is made of metal, more particularly of aluminium, or of plastics.

6. The device as set forth in claim 4 or 5, **characterized in that** said holder (38; 47) comprises a substantially U-shaped cross-section defining said cavity (31; 46) of said guide rail (15, 16; 45).

7. The device as set forth in any of the claims 4 to 6, **characterized in that** said sealing elements (28, 29) are extruded to said holder (38; 47).

8. The device as set forth in any of the claims 1 to 7, **characterized in that** said at least one drive means (17, 18, 19; 20, 21, 22) is secured to said window pane (10).

9. The device as set forth in any of the claims 2 to 8, **characterized in that** said cavity (31; 46) of said guide rail (15; 16; 45) is suitable for accommodating said drive element (19; 22).

10. The device as set forth in any of the claims 2 to 8, **characterized in that** said cavity (46) of said guide rail (45) is suitable for accommodating said drive element (19) and said electric motor (17).

11. The device as set forth in any of the claims 2 to 10, **characterized in that** each guided side edge (11, 12) of said moveable window pane (10) is assigned at least one drive element (19; 22).

12. The device as set forth in claim 11, **characterized in that** each side edge (11; 12) is assigned an electric motor (17; 20).

13. The device as set forth in claim 11, **characterized in that** an electric motor (17) is provided cooperating with said drive element (19; 22) at said guided side edges (11; 12).

14. The device as set forth in any of the claims 2 to 10, **characterized in that** one guided side edge (12) is assigned at least one drive element (19) powered by said electric motor (17) and the other guided side edge (11) is assigned a supporting mount (36) for support.

15. The device as set forth in claim 14, **characterized in that** said supporting element (36) is accommodated in said cavity (31; 46) of said guide rail (15, 16; 45).

16. The device as set forth in any of the claims 2 to 15, **characterized in that** said drive elements (19; 22) are arranged at said side edges (11; 12) of said window pane (10) spaced away from each other in pairs and parallel to each other, said window pane (10) being arranged in the middle of said drive element (19, 22).

17. The device as set forth in any of the claims 8 to 16, **characterized in that** each electric motor (17; 20) acts via a self-locking gear (26, 27), more particularly a worm gear, on said assigned drive element(s) (19; 22).

## Revendications

1. Dispositif pour guider et étancher une vitre mobile (10), en particulier une vitre latérale d'un véhicule automobile, comportant au moins un rail de guidage (15, 16 ; 45) qui comprend un volume intérieur (31 ; 46) pour guider des arêtes latérales (11, 12) de la vitre (10) et des éléments d'étanchement (28, 29) pour étancher la vitre (10), **caractérisé en ce que** le dispositif (50 ; 51 ; 52, 60) comprend au moins un moyen d'entraînement (17, 18, 19 ; 20, 21, 22) pour déplacer la vitre (10), qui coopère en coopération de formes ou en coopération de friction avec le rail de guidage (15, 16).

2. Dispositif selon la revendication 1, **caractérisé en ce que** chaque moyen d'entraînement comprend un moteur électrique (17 ; 20) qui entraîne au moins un élément d'entraînement (19 ; 22) qui coopère avec le rail de guidage (15, 16 ; 45).

3. Dispositif selon la revendication 2, **caractérisé en ce que** le rail de guidage (15, 16 ; 45) comprend une zone d'appui (30 ; 40) agencée dans le volume intérieur (31 ; 46) et coopérant avec l'élément d'entraînement (19 ; 22).

4. Dispositif selon la revendication 3, **caractérisé en ce que** la zone d'appui (30 ; 40) est réalisée sous forme d'évidements (32 ; 33) dans un support (38 ; 47) du rail de guidage (15, 16 ; 45), dans lesquels s'engage ledit au moins un élément d'entraînement (19 ; 22).

5. Dispositif selon la revendication 4, **caractérisé en ce que** le support (38 ; 47) est réalisé en métal, en particulier en aluminium, ou en matière plastique.

6. Dispositif selon l'une ou l'autre des revendications 4 et 5, **caractérisé en ce que** le support (38 ; 47) présente une section sensiblement en forme de U et délimite le volume intérieur (31 ; 46) du rail de guidage (15, 16 ; 45).

7. Dispositif selon l'une des revendications 4 à 6, **caractérisé en ce que** les éléments d'étanchement (28, 29) sont extrudés sur le support (38 ; 47).

8. Dispositif selon l'une des revendications 1 à 7, **caractérisé en ce que** ledit au moins un élément d'entraînement (17, 18, 19 ; 20, 21, 22) est fixé sur la vitre.

9. Dispositif selon l'une des revendications 2 à 8, **caractérisé en ce que** le volume intérieur (31 ; 46) du rail de guidage (15, 16 ; 45) convient pour recevoir l'élément d'entraînement (19 ; 22).

10. Dispositif selon l'une des revendications 2 à 8, **caractérisé en ce que** le volume intérieur (46) du rail de guidage (45) convient pour recevoir l'élément d'entraînement (19) et le moteur électrique (17).

11. Dispositif selon l'une des revendications 2 à 10, **caractérisé en ce qu'**au moins un élément d'entraînement (19 ; 22) est associé à chaque arête latérale guidée (11, 12) de la vitre mobile (10).

12. Dispositif selon la revendication 11, **caractérisé en ce qu'**un moteur électrique (17 ; 20) est associé à chaque arête latérale guidée (11 ; 12).

13. Dispositif selon la revendication 11, **caractérisé en ce qu'**il est prévu un moteur électrique (17) qui agit sur les éléments d'entraînement (19 ; 22) sur les arêtes latérales guidées (11, 12).

14. Dispositif selon l'une des revendications 2 à 10, **caractérisé en ce qu'**au moins un élément d'entraînement (19) entraîné par le moteur électrique (17) est associé à une arête latérale guidée (12), et un palier porteur (36) est associé à l'autre arête latérale guidée (11) pour la supporter.

15. Dispositif selon la revendication 14, **caractérisé en ce que** l'élément porteur (36) est reçu dans le volume intérieur (31 ; 46) du rail de guidage (15, 16 ; 45).

16. Dispositif selon l'une des revendications 2 à 15, **caractérisé en ce que** les éléments d'entraînement (19 ; 22) sur les arêtes latérales guidées (11 ; 12) de la vitre (10) sont agencés par paires, écartés et parallèles l'un à l'autre, la vitre (10) étant agencée au milieu par rapport aux éléments d'entraînement (19 ; 22).

17. Dispositif selon l'une des revendications 8 à 16, **caractérisé en ce que** chaque moteur électrique (17 ; 20) agit via un mécanisme de transmission auto-bloquant (26, 27), en particulier via un mécanisme de transmission à vis tangente, sur le ou les éléments d'entraînements associé(s) (19 ; 22).
